# EUROPÄISCHE PATENTSCHRIFT

(11) **EP 1 639 251 B1**
(45) Veröffentlichungstag und Bekanntmachung des Hinweises auf die Patenterteilung: **03.10.2007**
(21) Anmeldenummer: 04740293.8
(22) Anmeldetag: 25.06.2004
(51) Int. Cl.: F02D 41/40, F02M 61/18

(54) **SELBSTZÜNDENDE BRENNKRAFTMASCHINE**
COMPRESSION-IGNITION INTERNAL COMBUSTION ENGINE
MOTEUR A COMBUSTION INTERNE A AUTO-ALLUMAGE

(30) Priorität: 30.06.2003 DE 10329506
(43) Veröffentlichungstag der Anmeldung: 29.03.2006
(73) Patentinhaber: DaimlerChrysler AG, 70327 Stuttgart (DE)
(72) Erfinder: BLESSING, Matthias, 73663 Berglen (DE); BRAUN, Harald, 73734 Esslingen (DE); KELLER, Frank, 73760 Ostfildern (DE); KÖNIG, Gerhard, 73111 Lauterstein (DE); KRÜGER, Christian, 70597 Stuttgart (DE); RAAB, Alois, 73560 Böbingen (DE)
(86) Internationale Anmeldenummer: PCT/EP2004/006882
(87) Internationale Veröffentlichungsnummer: WO 2005/001267

(56) Entgegenhaltungen:
- EP-A- 1 035 315
- DE-A- 10 020 148
- DE-A- 10 207 189
- US-B2- 6 536 209

## Beschreibung

Die Erfindung betrifft ein Verfahren zum Betrieb einer Brennkraftmaschine nach Anspruch 1, insbesondere einer Dieselbrennkraftmaschine, und eine Einspritzvorrichtung nach Anspruch 15.

Beim Betrieb von Brennkraftmaschinen mit Direkteinspritzung wird versucht, einen Einfluss auf die Verbrennung und auf die Emissionsbildung durch Variation des Einspritzverlaufs zu nehmen. Bei direkteinspritzenden Brennkraftmaschinen mit Selbstzündung werden zur Gestaltung einer lastabhängigen Kraftstoffeinspritzung Einspritzventile eingesetzt, bei denen die Gestaltung des Einspritzverlaufs durch einen entsprechenden Aufbau sowie ein gezieltes Öffnen des Einspritzventils gesteuert wird. Hierdurch soll weiterhin die Funktionsweise einer nachgeschalteten Abgasnachbehandlung verbessert und optimiert werden. Beispielsweise kann eine gezielte Einspritzverlaufsformung zur Bereitstellung eines unterstöchiometrischen Abgases für die Desulphatisierung von NOx-Speicherkatalysatoren sowie zur On-Board-Erzeugung von NH3 dienen.

Aus einer nicht vorveröffentlichten Patentanmeldung mit dem amtlichen Aktenzeichen DE10159479.8-13 ist ein Verfahren bekannt, bei dem Kraftstoff als eine Haupteinspritzung und eine Nacheinspritzung in einen Brennraum eingebracht wird, wobei beide Einspritzungen getaktet vorgenommen werden können. Hierbei soll der zeitliche Ablauf der Verbrennung beeinflusst werden, so dass ein zeitlicher Ablauf des Drehmomentverlaufs bzw. ein Druckverlauf im Zylinder der Brennkraftmaschine verändert werden, um die Abgaszusammensetzung sowie eine Abgastemperatur zu beeinflussen.

Aus der DE 19953932 A1 ist ein Verfahren bekannt, bei dem eine kombinierte homogen/heterogene Betriebsweise eines Verbrennungsmotors für die Erzielung mittlerer und höherer Leistungen vorgeschlagen wird. Dabei sollen mit einer Einspritzstrategie sowohl eine frühe homogene Gemischbildung im Kompressionshub als auch eine darauffolgende heterogene Gemischbildung um den oberen Totpunkt ermöglicht werden, wobei die Kraftstoffeinspritzung bei der homogenen Gemischbildung mit einem geringeren Einspritzdruck als bei der heterogenen Gemischbildung erfolgt, um ein Auftragen von Kraftstoff auf die kalten Brennraumwände zu vermeiden. Es hat sich dennoch gezeigt, dass trotz der oben vorgeschlagenen Maßnahmen weiterhin erhöhte Abgasemissionen auftreten. Es müssen daher weitere Maßnahmen getroffen werden, mit denen die Abgasemissionen minimiert werden.

Aus der US 6,536,209 ist ein Verfahren bekannt, bei dem Kraftstoff sowohl während des Kompressionshubs als auch nach dem oberen Totpunkt eingespritzt wird. Dabei wird die Nacheinspritzung in Teilmengen derart getaktet eingespritzt, dass die Kraftstoffteilmengen der Nacheinspritzung unterschiedlich groß gebildet werden.

Der Erfindung liegt die Aufgabe zugrunde, ein Verfahren für eine Brennkraftmaschine mit Selbstzündung zu schaffen, mit dem die Abgasemissionen reduziert werden. Dies wird erfindungsgemäß durch die Merkmale des Anspruchs 1 gelöst.

Weiterhin ist es Ziel der Erfindung, eine Vorrichtung bereitzustellen, mit der eine selbstzündende Brennkraftmaschine hinsichtlich des Abgasverhaltens und des Verbrauchs verbessert wird. Dieses Ziel wird erfindungsgemäß durch eine Vorrichtung mit den Merkmalen des Anspruchs 15 erreicht.

Nach dem erfindungsgemäßen Verfahren wird Kraftstoff mittels einer eine Düsennadel aufweisenden Einspritzdüse mit Einspritzbohrungen in Form mehrerer Kraftstoffstrahlen direkt in einen Brennraum einer Brennkraftmaschine eingespritzt, wobei zu einem späteren Zeitpunkt nach der Haupteinspritzung eine Kraftstoffmenge als eine getaktete Nacheinspritzung eingespritzt wird, wobei die Nacheinspritzung in Teilmengen derart getaktet eingespritzt wird, dass die Kraftstoffteilmengen der Nacheinspritzung unterschiedlich groß gebildet werden. Hierdurch kann eine gezielte Anpassung der Kraftstoffteilmenge an die Kolbenstellung im Zylinder und/oder einen Betriebspunkt der Brennkraftmaschine erreicht werden, so dass sich die jeweilige Teilmenge rechtzeitig vor Erreichen der Zylinderwand mit der Brennraumluft vermischt, so dass eine Benetzung der Zylinderwand mit Kraftstoff weitgehend vermieden wird.

Gemäß der Erfindung werden während der getakteten Nacheinspritzung ein Hub der Düsennadel der Einspritzdüse und/oder ein Kraftstoffeinspritzdruck derart eingestellt, dass bei jeder in den Brennraum eingespritzten Teilmenge der Nacheinspritzung eine Reichweite des jeweiligen Kraftstoffstrahls im Brennraum derart begrenzt wird, dass die Reichweite kleiner als eine Entfernung bis zu einer Brennraumbegrenzung ist. Dadurch wird eine Kraftstoffwandanlagerung im Zylinder, die z.B. bei kleinerem Gasdruck und niedrigerer Temperatur im Zylinder stetig steigt, minimiert. Erfindungsgemäß wird ein verstärktes Aufbrechen und Verdampfen des Einspritzstrahls erzielt. Die getaktet vorgesehene Nacheinspritzung führt erfindungsgemäß zu einer Verkürzung der flüssigen Strahllänge. Dies ist die Länge bzw. Eindringtiefe eines aus flüssigem Kraftstoff gebildeten Einspritzstrahls. Somit wird ein Auftragen von Kraftstoff auf die kalten Brennraumwände vermieden, da dieser Kraftstoffanteil größtenteils mit der Restluft und dem Restgas im Zylinder reagiert und somit nicht wie bei erhöhtem Kraftstoffeintrag in das Motoröl gelangt.

Gemäß einer Ausgestaltung der Erfindung wird eine erste Kraftstoffteilmenge der Nacheinspritzung größer als eine nachfolgende Kraftstoffmenge der Nacheinspritzung bemessen. Hierdurch wird einer örtlich starken Anfettung des im Brennraum gebildeten Gemisches insbesondere während der getakteten Nacheinspritzung entgegengewirkt, so dass eine Rußpartikelbildung insbesondere während der Nacheinspritzung minimiert bzw. verhindert wird. Es ist zweckmäßig, die einzelnen Einspritzmengen während der Nacheinspritzung derart zu gestalten, dass jeweils eine bestimmte Kraftstoffmenge in den Brennraum gelangt, die eine intensive und vollständige Vermischung mit der Brennraumluft erfährt, bevor der Kraftstoffstrahl die Brennraumbegrenzung bzw. eine Zylinderwand erreicht hat.

Gemäß einer weiteren Ausgestaltung der Erfindung wird die Nacheinspritzung mit einem niedrigeren Einspritzdruck als dem der Haupteinspritzung in den Brennraum eingespritzt. Somit kann ein weiterer Kraftstoffwandauftrag vermieden werden, da sich ein Brennraumgegendruck während der Nacheinspritzung mit veränderter Kolbenstellung abnehmend verändert. Der Druck des eingespritzten Kraftstoffs kann weiterhin während der getakteten Nacheinspritzung, vorzugsweise in Abhängigkeit von der Kolbenstellung variiert bzw. kontinuierlich angepasst oder auf ein niedrigeres Niveau als während der Haupteinspritzung gesenkt werden, um dem abfallenden Brennraumdruck während eines Expansionshubs der Brennkraftmaschine entgegenzuwirken. Dadurch kann beispielsweise die Eindringtiefe der Kraftstoffteilmengen in Form von Einspritzstrahlen im Brennraum während der getakteten Nacheinspritzung konstant gehalten werden.

Gemäß einer weiteren Ausgestaltung der Erfindung wird ein Hub der Düsennadel der Einspritzdüse derart eingestellt, dass eine instabile, kavitierende Strömung in den Einspritzbohrungen der Einspritzdüse erzeugt wird. Hiermit sollen die Kraftstofftropfen innerhalb des eingespritzten Strahls kurz nach dem Austritt aus der Einspritzdüse zerfallen und rechtzeitig zerstäubt werden. Somit wird ein Auftreffen des Kraftstoffs z.B. auf die als Brennraumbegrenzung dienende Zylinderwand weitgehend minimiert.

Gemäß der vorliegenden Erfindung findet die Taktung der Nacheinspritzung derart statt, dass die Reichweite des Kraftstoffstrahls bei jeder eingespritzten Teilmenge im Brennraum begrenzt wird. Dadurch wird die Reichweite in etwa kleiner als eine Entfernung bis zu einer Zylinderwand weitgehend begrenzt, indem ein Zerfall der eingespritzten Kraftstoffstrahlen im Brennraum verstärkt wird. Die einzelnen Einspritztakte werden während der Nacheinspritzung derart gestaltet, dass jeweils die Strahlimpulse der Einzeleinspritzungen angepasst werden, und bei der jeweiligen Brennraumgasdichte die Reichweite der Kraftstoffstrahlen in etwa die Strecke bis zu der brennraumseitigen Zylinderwand oder dem Kolbenboden beträgt. Eine Steuerung eines Einspritzstrahlimpulses und einer Einspritz-Teilmenge wird vorzugsweise durch die Pulsdauer bzw. die Taktung in Kombination mit gezielter Einspritz-Düsennadelgestaltung vorgenommen, so dass die Kraftstoffstrahlen durch eine verstärkte Zerstäubung kurz nach dem Austritt aus der Einspritzdüse zerfallen. Eine Rußpartikelbildung und ein signifikanter Kraftstoffauftrag auf die Zylinderwand werden weitgehend vermieden bzw. minimiert.

Weitere Kriterien für die Gestaltung einer zusätzlichen Nacheinspritzung können sich aus den Anforderungen einer etwaigen Abgasnachbehandlungsmaßnahme ergeben.

Zur Durchführung des erfindungsgemäßen Verfahrens wird eine nach innen öffnende Düsennadel mit mehreren Einspritzbohrungen vorgeschlagen, bei der der Kraftstoff durch die Einspritzbohrungen in Form von Kraftstoffstrahlen in den Brennraum eingespritzt wird, so dass zwischen den eingespritzten Kraftstoffstrahlen ein Spritzlochkegelwinkel von 80° bis 140° oder von 80° bis 160° einstellbar ist.

Gemäß einer Ausgestaltung des erfindungsgemäßen Verfahrens ist der Hub der Düsennadel in einer Öffnungsrichtung verstellbar, so dass während der getakteten Nacheinspritzung der Hub der Düsennadel variabel eingestellt werden kann. Die Einstellung des Hubes kann wahlweise lastabhängig erfolgen. Dadurch wird eine während der getakteten Nacheinspritzung erfolgte Einspritzteilmenge variiert. Des Weiteren kann mit der Verstellung des Hubes eine instabile kavitierende Strömung in den Einspritzbohrungen der Einspritzdüse gebildet werden.

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen:
- Fig. 1: einen schematischen Querschnitt durch eine Brennkraftmaschine mit Selbstzündung,
- Fig. 2: ein Diagramm zum Verlauf einer Kraftstoffeinspritzung mit 5-fach getakteter Voreinspritzung, einer Haupteinspritzung und mit 5-fach getakteter Nacheinspritzung,
- Fig. 3: ein Diagramm zum Verlauf einer Kraftstoffeinspritzung mit 5-fach getakteter Voreinspritzung mit gleichbeleibender Taktdauer bei konstantem Nadelhub und steigendem Einspritzdruck während der Voreinspritzung, sowie einer Haupteinspritzung und eine 5-fache Nacheinspritzung mit abfallendem Einspritzdruck mit gleichbleibender Taktdauer bei konstantem Nadelhub,
- Fig. 4: ein Diagramm zum Verlauf einer Kraftstoffeinspritzung mit 4-fach getakteter Voreinspritzung mit ansteigender Taktdauer bei konstantem Einspritzdruck, sowie einer Haupteinspritzung und einer 4-fachen Nacheinspritzung bei einem konstantem Einspritzdruck mit abnehmender Taktdauer,
- Fig. 5: ein Diagramm zum einen Verlauf einer Kraftstoffeinspritzung mit eine Block-Voreinspritzung bei konstantem Einspritzdruck, sowie einer Haupteinspritzung und einer Block-Nacheinspritzung bei konstantem Einspritzdruck und
- Fig. 6: eine schematische Darstellung der Wirkung einer instabilen kavitierenden Strömung im Düsenloch einer Mehrlochdüse.

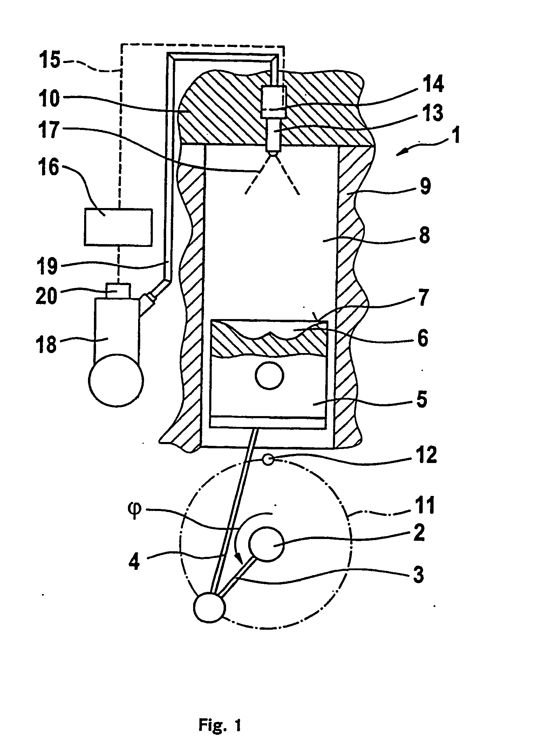

Fig. 1 zeigt eine Brennkraftmaschine 1, bei der eine Kurbelwelle 2 durch einen in einem Zylinder 9 geführten Kolben 5 über eine Pleuelstange 4 angetrieben wird. Zwischen dem Kolben 5 und einem Zylinderkopf 10 wird im Zylinder 9 ein Brennraum 8 gebildet, der eine in den Kolbenboden 7 eingelassene Kolbenmulde 6 umfasst.

Bei der Drehung einer Kurbel 3 der Kurbelwelle 2 auf einem Kurbelkreis 11 im Uhrzeigersinn verkleinert sich der Brennraum 8, wobei die in ihm eingeschlossene Luft verdichtet wird. Der Ladungswechsel im Brennraum 8 erfolgt über nicht dargestellte Gaswechselventile und Gaskanäle im Zylinderkopf 10.

Mit dem Erreichen eines oberen Totpunktes 12 der Kurbel 3, nachfolgend mit OT bezeichnet, ist das Ende der Verdichtung erreicht. Die aktuelle Lage des Kolbens 5 zum Zylinderkopf 10 wird durch den Kurbelwinkel ϕ in Bezug auf den oberen Totpunkt 12 bestimmt.

Eine Einspritzdüse 13 mit mehreren Einspritzbohrungen ist im Zylinderkopf 10 zentral angeordnet. Die Einspritzbohrungen sind jeweils um einen Winkel von 40° bis 80° zur Düsenachse geneigt. Der Spritzlochkegelwinkel beträgt ca. 80° bis 160°.Es kann sich prinzipiell um eine konventionelle und damit kostengünstige Lochdüse vom Typ Sitzloch, Mini-Sackloch oder Sackloch handeln. Die Einspritzdüse 13 wird über eine Signalleitung 15 und einen Aktuator 14, beispielsweise einen Piezo-Aktuator, von einer elektronischen Steuereinheit 16, der Motorsteuerung, angesteuert. Die aus der Einspritzdüse austretenden Einspritzstrahlen sind mit 17 bezeichnet.

Der Kraftstoff wird von einer Einspritzpumpe 18 in mehreren Druckstufen zur Verfügung gestellt, wobei ein Steuerventil 20, zweckmäßigerweise ein elektronisch ansteuerbares Magnetventil, den jeweiligen maximalen Druck in der Kraftstoffleitung 19 begrenzt. Bevorzugt wird mittels eines geeigneten Einspritzsystems der Einspritzdruck angepasst. Dabei kann ein nadelhubgesteuertes Einspritzsystem mit einer entsprechenden Druckmodulation verwendet werden.

Erfindungsgemäß weist die Einspritzdüse 13 vier bis vierzehn Einspritzbohrungen auf, welche vorzugsweise in einer oder zwei Lochreihen über dem Umfang verteilt angeordnet sind. Der Betrieb der Brennkraftmaschine 1 kann durch den optionalen Einsatz einer Einspritzdüse mit zwei unterschiedlich ansteuerbaren Lochreihen, z.B. durch eine innenöffnende Koaxial-Variodüse, optimiert werden. Vorzugsweise kann eine der beiden Lochreihen unter einem Spritzlochkegelwinkel α, vorzugsweise zwischen 130° und 160°, zur Darstellung eines konventionellen Magerbetriebs angesteuert werden, wobei dann die zweite Lochreihe, mit einem wesentlich kleineren Spritzlochkegelwinkel, vorzugsweise zwischen 80° und 140°, insbesondere zur Gestaltung einer Fettverbrennung mit einer Nacheinspritzung und gegebenenfalls für eine Voreinspritzung eingesetzt wird. Durch die Ansteuerung der Lochreihe mit dem kleineren Spritzlochkegelwinkel α, z.B. 80° anstelle 150°, wird eine freie Strahllänge bei einer späten Nacheinspritzung, beispielswesie bei 70°KW bis 90°KW nach OT verlängert. Somit trifft der Kraftstoffstrahl 17 nicht auf die Zylinderwand sondern wird in Richtung der Kolbenmulde 6 bzw. auf den Kolbenboden 7 gerichtet.

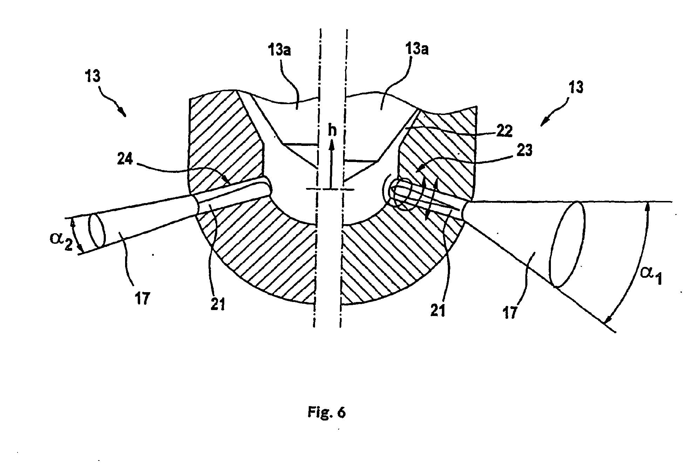

Die Einspritzdüse 13 weist eine in Fig. 6 dargestellte Düsennadel 13a auf, die mit einem nicht dargestellten Steuerelement verbunden ist. Durch die Ansteuerung der Düsennadel 13a durch das Steuerelement wird sie bewegt, um die Einspritzdüse 13 zu öffnen bzw. zu schließen. Dabei wird ein bestimmter Betriebshub h während einer Betriebsstellung betriebspunktabhängig und/oder in Abhängigkeit von dem Kurbelwinkel ϕ eingestellt. Ein Kraftstoffdurchfluss kann dann in Abhängigkeit vom Betriebshub h und einer Öffnungszeit bzw. einer Taktdauer sowie vom eingestellten Kraftstoffeinspritzdruck bestimmt bzw. verändert werden.

Das vorliegende Verfahren eignet sich insbesondere für ein kombiniertes homogen/heterogenes Brennverfahren mit Selbstzündung, so dass eine konventionelle Magerverbrennung, bekannt aus Dieselmotoren, sowie eine Fettverbrennung zur Optimierung einer nachgeschalteten Abgasnachbehandlungsanlage, die insbesondere für magerbetriebene Brennkraftmaschinen ausgelegt ist, durchgeführt werden kann.

Die Brennkraftmaschine 1 weist weiterhin eine nicht dargestellte Abgasreinigungsanlage mit z.B. mehreren Katalysatoreinheiten auf. Die selbstzündende Brennkraftmaschine 1 wird üblicherweise weitgehend in einem Magerbetrieb und bei Bedarf zur Optimierung der nachgeschalteten Abgasreinigungsanlage in einem Fettbetrieb gefahren. Als Magerbetrieb wird ein überstöchiometrischer Motorbetrieb bezeichnet, bei dem in der Verbrennung ein Sauerstoffüberschuss, d.h. λ>1, herrscht. Unter Fettbetrieb wird ein unterstöchiometrischer Motorbetrieb verstanden, bei dem in der Verbrennung ein Kraftstoffüberschuss, d.h. λ<1, herrscht. Dementsprechend bezeichnet eine magere Abgaszusammensetzung einen Sauerstoffüberschuss im Abgas und eine fette Abgaszusammensetzung einen Sauerstoffmangel im Abgas.

Bei fetter Abgaszusammensetzung kann mittels einer ersten Katalysatoreneinheit Ammoniak aus entsprechenden Abgasbestandteilen erzeugt werden. Eine zweite Katalysatoreinheit, die bei fetter Abgaszusammensetzung von der ersten Katalysatoreinheit erzeugten Ammoniak adsorbiert, setzt bei magerer Abgaszusammensetzung den Ammoniak wieder frei, der dann als Reduktionsmittel für eine Reduktionsreaktion dient, mit der im Abgas enthaltene Stickoxide unter gleichzeitiger Oxidation des Ammoniaks in Stickstoff umgewandelt werden. Sobald im Magerbetrieb die zwischengespeicherte Ammoniakmenge erschöpft ist, wird auf Fettbetrieb umgeschaltet. Für die NOx-Regeneration und die Desulphatisierung von NOx-Speicherkatalysatoren sowie für die On-Board-Erzeugung von NH3 zur Regeneration eines SCR-Katalysators ist es erforderlich, am Motor ein unterstöchiometrisches Abgas zu erzeugen und den Katalysatoren, z.B. dem NOx-Speicherkat und/oder dem SCR-Katalysator zur Verfügung zu stellen.

Im Betrieb der Brennkraftmaschine 1 werden Maßnahmen zur Vermeidung der Anlagerung von flüssigem Kraftstoff in Verbindung mit einer nach einer Haupteinspritzung HE vorgesehenen Nacheinspritzung NE oder mit einer vor der Haupteinspritzung HE vorgesehenen Voreinspritzung VE getroffen, so dass ein frühes Vermischen mit der im Brennraum befindlichen Verbrennungsluft stattfindet. Diese Maßnahmen können einzeln oder miteinander kombiniert vorgenommen werden, so dass jede denkbare Kombination dieser Maßnahmen bei Bedarf gewählt werden kann.

Sowohl im Magerbetrieb als auch im Fettbetrieb der Brennkraftmaschine 1 kann die einzubringende Kraftstoffmenge durch eine betriebspunktabhängige Aufteilung als eine Vor- Haupt- und Nacheinspritzmenge in den Brennraum eingebracht werden. Die vorliegende Erfindung dient in erster Linie zur Optimierung der unterschiedlichen Kraftstoffmengen und deren betriebpunktabhängigen Anpassung, so dass eine Brennraumwandanlagerung mit Kraftstoff vermieden wird.

Bei der vorliegenden Brennkraftmaschine wird die Erzeugung eines unterstöchiometrischen Abgases durch die Nacheinspritzung erzielt, so dass die spät eingebrachte Kraftstoffmenge zumindest teilweise nicht an der Verbrennung teilnimmt. Es bieten sich grundsätzlich mehrere Maßmnahmen an, um unterstöchiometrisches Abgas zu bilden.

Dies kann beispielsweise auch durch eine luft- und abgasseitige Drosselung des Motors oder eine Erhöhung einer Abgasrückführrate sowie einer Erhöhung der Kraftstoffmenge im Zylinder oder im Abgasstrang lastneutral erzielt werden. Die kraftstoffseitige Maßnahme durch eine entsprechende Nacheinspritzung bietet gegenüber der Drosselung des Motors und der Erhöhung der Abgasrückführrate deutliche Vorteile in Bezug auf die zeitlich schnelle Realisierbarkeit des Fettbetriebs. So können die durch eine getaktet vorgenommene Nacheinspritzung gebildeten Teilmengen von Arbeitsspiel zu Arbeitsspiel mengenmäßig verändert werden. Die innermotorische Kraftstoffeinbringung bietet gegenüber der nachmotorischen Kraftstoffdosierung Vorteile insbesondere in Bezug auf die Präzision bzw. erforderliche Genauigkeit bei der Darstellung der für das Abgasnachbehandlungssystem erforderlichen Abgasbestandteile CO, H₂ bei einem Adsorber-Katalysator und NH₃ bei einem SCR-Katalysator mit einem vergleichbar geringen Kostenaufwand.

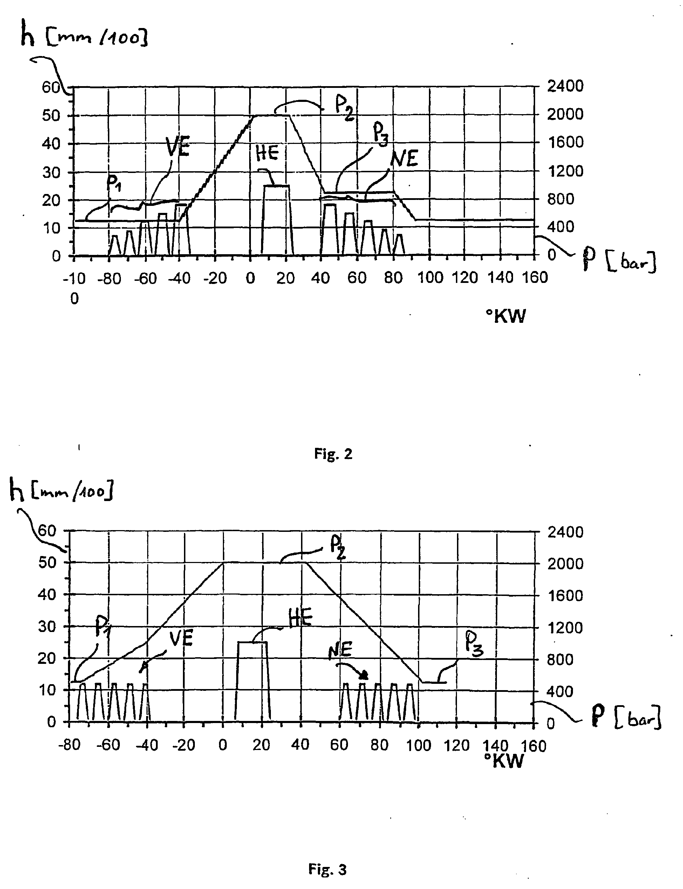

Die in Fig. 2 dargestellte Einspritzstrategie sieht eine Vor-, eine Haupt- und eine Nacheinspritzung vor. Die Voreinspritzung VE findet als eine Homogenisierungseinspritzung in einem Bereich zwischen 140°KW und 40°KW vor OT statt. Dabei findet die Voreinspritzung VE bei einem Einspritzdruck P₁ als eine getaktete Kraftstoffeinspritzung statt. Die Taktung erfolgt derart, dass bei jeder Taktung einen unterschiedlichen Nadelhub h eingestellt wird. Durch die gezielte Taktung der Voreinspritzung VE wird eine Homogenisierung der eingespritzten Teilmengen erreicht. Alternativ zur getakteten Voreinspritzung kann die Homogenisierung im Kompressionshub auch dadurch erzeugt werden, dass Kavitationseffekte im Düsensacklochbereich und in den Düsenlöchern durch eine konstante Positionierung der Düsennadel 13a der Einspritzdüse 13 z.B. mittels einer direkten Ansteuerung über ein Piezostellglied erfolgen.

Die Haupteinspritzung erfolgt dann bei einem höheren Einspritzdruck P₂ in einem Bereich zwischen 10°KW vor OT bis 20°KW nach OT. Bei der Haupteinspritzung HE wird ein größerer Nadelhub h als bei der Voreinspritzung VE eingestellt. Vorzugsweise wird die Hautpeinspritzmenge HE in einem Abstand von 5°KW bis 15°KW zum Zündzeitpunkt der homogenen Verbrennung unter möglichst hohem Einspritzdruck P2 eingebracht. Die Lage der Haupteinspritzung HE ist durch den maximal zulässigen Spitzendruck der Brennkraftmaschine und den maximal zulässigen Druckanstieg des Motors begrenzt. Zur Vermeidung eines Drehmomentanstiegs durch die Haupteinspritzung HE, in Kombination mit der vorgeschalteten Voreinspritzung VE und der Nacheinspritzung NE wird die Haupteinspritzmenge entsprechend so reduziert, dass das Motordrehmoment insgesamt dem Moment eines reinen Magerbetriebs entspricht.

Die Einspritzung einer zusätzlichen Kraftstoffmenge in Form der Nacheinspritzung findet insbesondere während der Fettphase mittels einer 2- bis 8-fachen getakteten Einspritzung im Expansionshub während eines Intervalls von ca. 20° bis 150° KW nach OT statt. Die einzelnen Einspritztakte für die Einspritzung werden bezüglich Dauer, Einspritzdruck, Nadelhubverlauf und Wechselwirkung mit der Zylinderinnenströmung so angepasst, dass eine bestmögliche Gemischverteilung erzielt wird, so dass kein signifikanter Kraftstoffauftrag auf die Zylinderwand erfolgt. Die Nadelöffnungsdauer bei den einzelnen Takten der Nacheinspritzung NE wird kleiner als die Nadelöffnungsdauer der Haupteinspritzung HE eingestellt. Die Nadelhubeinstellung wird während der Nacheinspritzung NE unterschiedlich vorgenommen, wobei sie vorzugsweise nachfolgend kleiner eingestellt wird. Dabei wird während der Nacheinspritzung bei veränderlichem Nadelhub ein konstanter Kraftstoffeinspritzdruck eingestellt, der vorzugsweise höher als der während der Voreinspritzung VE und kleiner als der während der Haupteinspritzung HE ist. Vorzugsweise wird die Taktung während der Nacheinspritzung derart vorgenommen, dass die erste Kraftstoffteilmenge der Nacheinspritzung größer ist als die nachfolgende Kraftstoffteilmenge.

Eine zweite Einspritzstrategie ist in Fig. 3 dargestellt, in der die Brennkraftmaschine 1 in einem kombinierten Homogen/Heterogen-Betrieb mit 5-fach getakteter Voreinspritzung VE mit gleichbleibender Taktdauer und steigendem Einspritzdruck während der Voreinspritzung VE, sowie einer Haupteinspritzung HE mit einem erhöhten Einspritzdruck P2 bei einem maximal eingestellten Nadelhub h und einer 5-fachen Nacheinspritzung NE mit gleichbleibender Taktdauer und absinkendem Einspritzdruck betrieben wird. Vorzugsweise wird die Taktung während der Nacheinspritzung derart vorgenommen, dass die erste Kraftstoffteilmenge der Nacheinspritzung gleich groß bzw. größer ist als die nachfolgende Kraftstoffteilmenge.

Die getaktete Voreinspritzung VE gemäß Fig. 3 erfolgt im Kompressionshub in einem Kurbelwinkelbereich von etwa 80°KW bis etwa 35°KW vor OT. Sie erfolgt derart, dass bei jeder Taktung der Einspritzdruck zunimmt, d.h. während der Voreinspritzung VE herrscht, beispielsweise in einem Common-Rail-Einspritzsystem, bei der früh erfolgten Einspritzteilmenge ein niedrigerer Druck als bei der darauffolgenden Einspritzteilmenge, wobei der Nadelhub h während der getakteten Voreinspritzung VE konstant bleibt. Die Haupteinspritzung findet dann bei einem höheren Einspritzdruck P2 in einem Bereich zwischen dem oberen Totpunkt und etwa 30°KW nach OT. Bei der Haupteinspritzung HE wird ein höherer Nadelhub h als bei der Voreinspritzung VE eingestellt, wobei eine Nadelöffnungsdauer bei der Haupteinspritzung HE größer als die Nadelöffnungsdauer der Vor- und der Nacheinspritzung HE eingestellt wird. Während der Nacheinspritzung wird der Nadelhub h auf einem konstanten und kleineren Wert als bei der Haupteinspritzung gehalten, wobei sich der Einspritzdruck verändert bzw. kontinuierlich abnimmt. Es werden während der Vor- und der Nacheinspritzung unterschiedliche Kraftstoffdruck-Änderungsraten eingestellt, da sowohl während der Vor- als auch während der Nacheinspritzung im Brennraum 8 unterschiedliche Verbrennungsreaktionen stattfinden, die ungleiche Brennraumdruck- bzw. Temperaturverläufe hervorrufen.

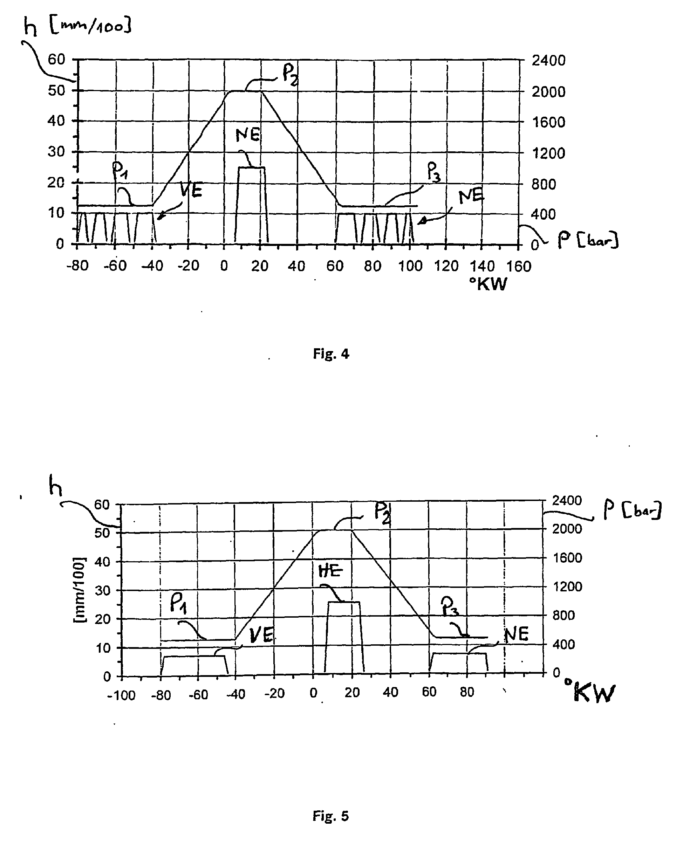

Eine besonders vorteilhafte Einspritzstrategie sieht der Einspritzverlauf gemäß Fig. 4 vor. Darin wird ein kombinierter Homogen/Heterogen-Betrieb mit 4-fach getakteter Voreinspritzung mit ansteigender Taktdauer bei konstantem Einspritzdruck vorgeschlagen, bei dem die Düsennadel 13a bei einer unteren Hubstellung verharrt. Weiterhin sind eine Haupteinspritzung HE bei einem erhöhten Einspritzdruck P2 und einem maximal eingestellten Nadelhub h sowie eine Nacheinspritzung NE mit abnehmender Taktdauer bei konstantem Einspritzdruck P3 vorgesehen. Vorzugsweise kann die Taktung während der Nacheinspritzung derart vorgenommen werden, dass die erste Kraftstoffteilmenge der Nacheinspritzung größer ist als die nachfolgende Kraftstoffteilmenge.

Das vorliegende Einspritzsystem ermöglicht während einer unterteilten bzw. getakteten Einspritzung die Einstellung unterschiedlicher Hubstellungen, so dass je nach Bedarf eine unterschiedliche Einspritzteilmenge vorgenommen werden kann. Wahlweise ist es dennoch möglich, die Taktung gemäß Fig. 5 durch eine Blockeinspritzung mit definiert begrenzter Hubstellung, z.B. mit Hilfe eines Piezostellgliedes zu ersetzen. Diese bietet Vorteile gegenüber der Taktung im Hinblick auf Mengenkonstanz und Düsenverschleiß.

Bei einer rein konventionellen Magerverbrennung ohne eine Nacheinspritzung wird alternativ die Voreinspritzung VE in einem Bereich zwischen 40°KW und dem oberen Totpunkt OT vorgenommen, wobei der Beginn der Haupteinspritzung HE vorzugsweise in einem Bereich zwischen 15°KW vor OT und 15°KW nach OT stattfindet. Beide können als eine Blockeinspritzung so getätigt werden, dass ein hoher Impuls der Einspritzstrahlen erreicht wird. Um den Erfordernissen für eine effektive magere Verbrennung zu genügen, wird dabei der Einspritzdruck auf einem maximalen Niveau eingestellt.

Der Einspritzdruck P₁ während der Voreinspritzung und der Einspritzdruck P₃ während der Nacheinspritzung werden vorzugsweise in den o.g. Einspritzstrategien gemäß Fig. 2 bis Fig. 5 so gewählt, dass sich durch die getaktete Vor- und Nacheinspritzung der eingespritzte Kraftstoff in nicht signifikantem Maße an der Brennraumbegrenzung des Brennraums 8 anlagert.

In Fig. 6 ist eine schematische Darstellung der Einspritzdüse 13 vom Typ Sacklochdüse angegeben, wobei sich eine Düse vom Typ Sitzlochdüse ebenso gut eignet. In der Einspritzdüse 13 gemäß Fig. 6 ist die Wirkung einer hervorgerufenen instabilen kavitierenden Strömung in einem Düsenloch 21 der Einspritzdüse 13 bei geringem Nadelhub h der Düsennadel 13a, d. h. bei teilweise geöffneter Einspritzdüse 13, und die dadurch erzielte Wirkung auf einen Ausbreitungswinkel α₁ des Einspritzstrahls 17 dargestellt.

Auf der rechten Seite in Fig. 6 ist die Einspritzdüse 13 nur teilweise geöffnet, wodurch eine Drosselung im Düsennadelsitz 22 erzielt wird. Durch diese Drosselung wird im Düsenloch 21 eine turbulente bzw. eine instabile kavitierende Strömung hervorgerufen, die zu einem großen Ausbreitungswinkel α₁des Kraftstoffstrahls 17 führt. Im Vergleich zu einer voll geöffneten Einspritzdüse mit maximaler Hubeinstellung, wie auf der linken Seite der Fig. 6 dargestellt, ist der Ausbreitungswinkel α₁ durch die instabile kavitierende Strömung größer als ein Ausbreitungswinkel α₂, der ohne eine solche Strömung bewirkt wird. Die instabile kavitierende Strömung ruft starke Fluktuationen der Düseninnenströmung 23 hervor, welche beim Kraftstoffaustritt aus dem Düsenloch 21 zu einem verstärkten Kraftstoffstrahlzerfall führen und somit zu einem großen Ausbreitungswinkel α₁.

Der Kraftstoffstrahl mit dem Ausbreitungswinkel α₁ breitet sich im Brennraum mit einer intensiven Zerstäubung aus, und bewirkt somit eine bessere Homogenisierung sowie eine schnelle Kraftstoffverdampfung, so dass mehr Kraftstoff in einer Teilmenge der Voreinspritzung VE oder der Nacheinspritzung NE ohne eine nennenswerte Brennraumwandbenetzung eingespritzt werden kann. Dagegen wird bei der Einspritzdüse 13 mit der maximalen Hubeinstellung gemäß der linken Seite in Fig. 6 im inneren des Düsenlochs 21 auf der linken Seite eine zweiphasige Strömung 24 hervorgerufen, welche zu einem konventionellen Kraftstoffzerfall führt. Im Vergleich zu einer teilweise geöffneten Einspritzdüse ist der Ausbreitungswinkel α₂ kleiner als der Ausbreitungswinkel α₁.

Eine gezielte Einstellung einer gewünschten Drosselwirkung im Sitz der Düsennadel kann mit einer geeigneten konstruktiven Maßnahme, z.B. durch einen 2-Federhalter an der Einspritzdüse das Verharren der Düsennadel auf einer Hubstellung, die zwischen der vollständig geschlossenen bzw. geöffneten Position liegt, unterstützt werden. Alternativ kann diese Einstellung über eine mittels Piezostellglied direkt gesteuerte Düsennadel realisiert werden.

Um einen möglichst großen Ausbreitungswinkel α₁ bei einer teilweise geöffneten Mehrloch-Einspritzdüse zu erzielen, sollte vorzugsweise die Ansteuerung derart erfolgen, dass der effektive Strömungsquerschnitt im Nadelsitz vorzugsweise etwa das 0,8 bis 1,2 -fache eines effektiven Strömungsquerschnittes der Summe aller Querschnitte der Einspritzbohrungen beträgt.

Es ist zweckmäßig, bei den o.g. Einspritzstrategien gemäß Fig. 2 bis Fig. 5 zusätzlich einen zuschaltbaren variablen Drall im Brennraum 8 der Brennkraftmaschine 1 zu bilden, so dass eine Gemischwolke einer Einspritzteilmenge sowohl bei der Voreinspritzung VE als auch bei der Nacheinspritzung NE durch eine angepasste Drallbewegung der Ladung im Brennraum unterstützt und gleichzeitig die Strahleindringtiefe reduziert wird. Die Strahlkeule bzw. die Gemischwolke eines Einspritztaktes wird demnach durch die Drallströmung so weit gedreht, dass bei einem nachfolgenden Einspritztakt die neu gebildeten Strahlkeulen nicht in die Gemischwolke der vorangegangenen Einspritzteilmenge eindringen. Hierdurch werden örtliche Überfettungen sowie die Strahleindringtiefen verringert, so dass insbesondere weniger Rußpartikel gebildet werden.

Erfindungsgemäß beträgt die Gesamteinspritzmenge der Voreinspritzung VE vorzugsweise, insbesondere bei den o.g. Einspritzstrategien, im unteren Teillastbereich, d.h. bis zu 70% Last, etwa 20% bis 50% der Haupteinspritzmenge und im oberen Lastbereich, d.h. von 70% Last bis zur Vollast, etwa 10% bis 30% der Haupteinspritzmenge. Sie wird dabei so gewählt, dass klopfende Verbrennung sicher vermieden wird. Dieser homogenisierte Kraftstoffanteil verbrennt dann annähernd Ruß- und NOx-frei, erzeugt jedoch bereits einen erheblichen Anteil, der für die NOx-Reduktion am NOx-Speicher-Kat erforderlichen CO-Emission und liefert einen wichtigen Anteil zur Reduzierung des Luftverhältnises.

Es ist auch denkbar, auf die vorangeschaltete homogene Verbrennung, insbesondere bei einer Fettverbrennung, zu verzichten und den Spritzbeginn der Haupteinspritzung noch weiter nach früh zu verlegen in einem Bereich zwischen 20°KW und 5°KW vor OT. Dabei wird während der Nacheinspritzung im Fettbetrieb der Einspritzdruck der einzelnen Kraftstoffteilmengen verändert, da die Gasdichte im Brennraum kontinuierlich abnimmt. Demnach wird der Kraftstoffeinspritzdruck dementsprechend ebenfalls stufenweise bzw. kontinuierlich reduziert. Die Gesamteinspritzmenge der Haupteinspritzung HE wird dabei so gewählt, dass in Kombination mit dem nachfolgend eingespritzten Kraftstoff der Nacheinspritzung NE das Drehmoment der konventionellen Magerverbrennung nicht über- bzw. unterschritten wird. Die Begrenzung der Frühverstellung der Haupteinspritzung HE bildet wiederum der max. zulässige Spitzendruck und die max. zulässige Druckanstieg im Zylinder. Der Anstieg bzw. Abfall des Drehmoment im Fettbetrieb über oder unter dem Wert der Magerverbrennung wird durch die Anpassung des Spritzbeginns und der Einspritzmenge der Haupteinspritzung HE verhindert.

Erfindungsgemäß werden die Einspritzzeitpunkte sowie die Mengenaufteilung der einzelnen Teilmengen in Abhängigkeit vom jeweiligen Verdichtungsverhältnis des Motors verändert. Die hier angegebenen Werte eignen sich insbesondere für ein Verdichtungsvehältnis von ε=16. Bei höheren Verdichtungsverhältnissen verschiebt sich die Ansteuerdauer für die Einspritzzeitpunkte der Homogenmenge aufgrund des früheren Zündbeginns der Homogenverbrennung bei höherer Verdichtung um den Betrag in Grad Kurbelwinkel nach früh. Analog verschiebt sich der Beginn der Einspritzung der Homogenmenge bei der Wahl eines geringeren Verdichtungsverhältnisses um den Betrag in Grad Kurbelwinkel nach spät. Das gleiche gilt auch für unterschiedlich gewählte Ansauglufttemperaturen. Maßnahmen welche die Ansauglufttemperatur verringern, ermöglichen einen späteren Einspritzbeginn der Homogenmenge. Maßnahmen die eine Erhöhung der Ansauglufttemperatur bewirken, erfordern einer Verlagerung des Spritzbeginns der Homogenmenge nach früh.

## Patentansprüche

1. Verfahren zum Betrieb einer Brennkraftmaschine (1) mit Selbstzündung, bei dem
- Kraftstoff mittels einer eine Düsennadel (13a) aufweisenden Einspritzdüse (13) mit Einspritzbohrungen (21) in Form mehrerer Kraftstoffstrahlen (17) in einen Brennraum (8) eingespritzt wird,
- während eines Einspritzvorgangs ein Teil des Kraftstoffes als eine Haupteinspritzung (HE) und zu einem späteren Zeitpunkt nach der Haupteinspritzung (HE) eine Kraftstoffmenge als eine getaktete Nacheinspritzung (NE) in Teilmengen derart getaktet eingespritzt wird, dass die Kraftstoffteilmengen der Nacheinspritzung (NE) unterschiedlich groß gebildet werden,
**dadurch gekennzeichnet, dass**
während der getakteten Nacheinspritzung (NE) ein Hub der Düsennadel (13a) der Einspritzdüse (13) und/oder ein Kraftstoffeinspritzdruck derart eingestellt werden, dass bei jeder in den Brennraum (8) eingespritzten Teilmenge der Nacheinspritzung (NE) eine Reichweite des jeweiligen Kraftstoffstrahls (17) im Brennraum derart begrenzt wird, dass die Reichweite kleiner als eine Entfernung bis zu einer Brennraumbegrenzung ist.

2. Verfahren nach Anspruch 1,
**dadurch gekennzeichnet, dass**
eine erste Kraftstoffteilmenge der Nacheinspritzung (NE) größer als eine nachfolgende Kraftstoffmenge der Nacheinspritzung (NE) bemessen wird.

3. Verfahren nach einem der vorhergehenden Ansprüche,
**dadurch gekennzeichnet, dass**
die Nacheinspritzung (NE) mit einem niedrigeren Einspritzdruck als dem der Haupteinspritzung (HE) in den Brennraum (8) eingespritzt wird.

4. Verfahren nach einem der vorhergehenden Ansprüche,
**dadurch gekennzeichnet, dass**
mit der Haupteinspritzung (HE) in einem Bereich von 10°KW vor dem oberen Totpunkt bis 20°KW nach dem oberen Totpunkt begonnen wird.

5. Verfahren nach einem der vorhergehenden Ansprüche,
**dadurch gekennzeichnet, dass**
mit der Nacheinspritzung (NE) in einem Bereich von 30°KW bis 100°KW nach dem Ende der Haupteinspritzung (HE) begonnen wird.

6. Verfahren nach einem der vorhergehenden Ansprüche,
**dadurch gekennzeichnet, dass**
die Nacheinspritzung (NE) in einer zwei- bis achtfachen Taktung in einem Expansionshub in einem Bereich von 20°KW bis 150°KW nach dem oberen Totpunkt erfolgt.

7. Verfahren nach einem der vorhergehenden Ansprüche,
**dadurch gekennzeichnet, dass**
ein Teil des Kraftstoffs als eine getaktete Voreinspritzung (VE) mit einem niedrigeren oder gleich großen Einspritzdruck als dem der Haupteinspritzung (HE) eingespritzt wird.

8. Verfahren nach Anspruch 7,
**dadurch gekennzeichnet, dass**
die Voreinspritzung (VE) in einem Bereich von 140°KW bis 60°KW vor dem oberen Totpunkt eingespritzt wird.

9. Verfahren nach Anspruch 7 oder 8,
**dadurch gekennzeichnet, dass**
die Haupteinspritzung (HE) in einem Bereich von 5°KW bis 30°KW nach einem Zündzeitpunkt der Voreinspritzung (VE) in den Brennraum (8) vorgenommen wird.

10. Verfahren nach einem der Ansprüche 7 bis 9,
**dadurch gekennzeichnet, dass**
die Kraftstoffmenge der Voreinspritzung (VE) in einem unteren und mittleren Lastbereich etwa 20% bis 50% der Kraftstoffmenge der Haupteinspritzung (HE) und in einem oberen Lastbereich bzw. Vollastbereich etwa 10% bis 30% der Kraftstoffmenge der Haupteinspritzung (HE) beträgt.

11. Verfahren nach einem der Ansprüche 7 bis 10,
**dadurch gekennzeichnet, dass**
während der Nacheinspritzung (NE) und/oder der Voreinspritzung (VE) mittels einer im Brennraum (8) gebildeten Drallbewegung eine während eines Einspritztaktes erzeugte Kraftstoffwolke eines Kraftstoffstrahls (17) versetzt oder seitlich verschoben wird.

12. Verfahren nach einem der vorhergehenden Ansprüche,
**dadurch gekennzeichnet, dass**
der Hub der Düsennadel (13a) der Einspritzdüse derart eingestellt wird, dass eine instabile kavitierende Strömung in den Einspritzbohrungen (21) der Einspritzdüse (13) erzeugt wird.

13. Verfahren nach einem der vorhergehenden Ansprüche,
**dadurch gekennzeichnet, dass**
der Hub der Düsennadel (13a) der Einspritzdüse (13) derart variiert wird, dass innerhalb der Einspritzdüse (13) ein effektiver Strömungsquerschnitt zwischen der Düsennadel (13a) und einem Düsennadelsitz (22) etwa das 0,8 bis 1,2-fache eines effektiven Strömungsquerschnittes der Summe aller Einspritzbohrungen beträgt.

14. Einspritzdüse zur Durchführung des Verfahrens nach einem der Ansprüche 1 bis 13, welche eine nach innen öffnende Düsennadel (13a) und mehreren Einspritzbohrungen (21) aufweist,
**dadurch gekennzeichnet, dass**
zwischen den eingespritzten Kraftstoffstrahlen (17) ein Spritzlochkegelwinkel von 80° bis 140° einstellbar ist.

15. Einspritzdüse nach Anspruch 14,
**dadurch gekennzeichnet, dass**
der Hub der Düsennadel (13a) der Einspritzdüse (13) derart einstellbar ist, dass innerhalb der Einspritzdüse (13) ein effektiver Strömungsquerschnitt zwischen der Düsennadel (13) und dem Nadelsitz (22) etwa das 0,8 bis 1,2-fache eines effektiven Strömungsquerschnittes der Summe aller Einspritzbohrungen (21) beträgt.

16. Einspritzdüse nach Anspruch 15,
**dadurch gekennzeichnet, dass**
der Hub der Düsennadel (13a) mittels einer Zweifederhalterung, einer piezogesteuerten Düsennadel oder einer Koaxial-Variodüse einstellbar ist.

## Claims

1. Method for the operation of an internal combustion engine (1) with self-ignition, in which:
- fuel is injected into a combustion chamber (8) in the form of several fuel jets (17) by means of an injection nozzle (13) having a nozzle needle (13a) with injection holes (21),
- during an injection process part of the fuel is injected as a main injection (HE) and at a later point in time after the main injection (HE) a quantity of fuel is injected in part-quantities as a pulsed after-injection (NE), times in such manner that the said fuel part-quantities of the after-injection (NE) are of different size,
**characterised in that**
during the pulsed after-injection (NE) a stroke of the nozzle needle (13a) of the injection nozzle (13) and/or a fuel injection pressure are adjusted so that when each part-quantity of the after-injection (NE) is injected into the combustion chamber (8) a range of the respective fuel jet (17) in the combustion chamber is limited in such manner that the said range is smaller than the distance to a boundary of the combustion chamber.

2. Method according to Claim 1,
**characterised in that**
a first fuel part-quantity of the after-injection (NE) is larger than a subsequent fuel quantity of the after-injection (NE).

3. Method according to either of the preceding claims,
**characterised in that**
the after-injection (NE) is effected into the combustion chamber (8) with a lower injection pressure than the pressure of the main injection (HE).

4. Method according to any of the preceding claims,
**characterised in that**
the main injection (HE) begins in a crankshaft angle range of 10° before top-dead-centre to 20° after top-dead-centre.

5. Method according to any of the preceding claims,
**characterised in that**
the after-injection (NE) begins in a crankshaft angle range of 30° to 100° after the end of the main injection (HE).

6. Method according to any of the preceding claims,
**characterised in that**
the after-injection (NE) takes place in two to eight pulses during an expansion stroke in a crankshaft angle range of 20° to 150° after top-dead-centre.

7. Method according to any of the preceding claims,
**characterised in that**
part of the fuel is injected as a timed pre-injection (VE) at an injection pressure lower than or equal to the pressure of the main injection (HE).

8. Method according to Claim 7,
**characterised in that**
the pre-injection (VE) is effected in a crankshaft angle range of 140° to 60° before top-dead-centre.

9. Method according to Claims 7 or 8,
**characterised in that**
the main injection (HE) is effected in a crankshaft angle range of 5° to 30° after an ignition time of the pre-injection (VE) in the combustion chamber (8).

10. Method according to any of Claims 7 to 9,
**characterised in that**
the quantity of fuel used for the pre-injection (VE) in a lower and middle load range amounts to approximately 20% to 50% of the fuel quantity of the main injection (HE), and in an upper load range or at full load, to approximately 10% to 30% of the fuel quantity of the main injection (HE).

11. Method according to any of Claims 7 to 10,
**characterised in that**
during the after-injection (NE) and/or the pre-injection (VE) a fuel cloud of a fuel jet (17) produced during am injection pulse is displaced or moved laterally by virtue of a spiralling movement that takes place in the combustion chamber (8).

12. Method according to any of the preceding claims,
**characterised in that**
the stroke of the nozzle needle (13a) of the injection nozzle is adjusted so that unstable, cavitational flow takes place in the injection holes (21) of the injection nozzle (13).

13. Method according to any of the preceding claims,
**characterised in that**
the stroke of the nozzle needle (13a) of the injection nozzle (13) is varied so that within the injection nozzle (13) an effective flow cross-section between the nozzle needle (13a) and a nozzle needle seat (22) is approximately 0.8 to 1.2 times the effective flow cross-section of the sum of all the injection holes.

14. Injection nozzle for implementing the method according to any of Claims 1 to 13, which comprises an inwardly opening nozzle needle (13a) and several injection holes (21),
**characterised in that**
an injection hole cone angle can be set between the injected fuel jets (17).

15. Injection nozzle according to Claim 14,
**characterised in that**
the stroke of the nozzle needle (13a) of the injection nozzle (13) can be set so that within the injection nozzle (13) an effective flow cross-section between the nozzle needle (13a) and a nozzle needle seat (22) is approximately 0.8 to 1.2 times the effective flow cross-section of the sum of all the injection holes.

16. Injection nozzle according to Claim 15,
**characterised in that**
the stroke of the nozzle needle (13a) can be adjusted by means of a double spring holder, a piezo-controlled nozzle needle or a coaxial vario-nozzle.

## Revendications

1. Procédé pour faire fonctionner un moteur à combustion interne (1) à auto-allumage, d'après lequel,
- du carburant est injecté dans une chambre de combustion (8) sous la forme de plusieurs jets de carburant (17), au moyen d'un injecteur (13) comportant une aiguille d'injecteur (13a) et plusieurs alésages d'injection (21),
- pendant une phase d'injection, une partie du carburant est injectée en tant qu'injection principale (HE), et à un instant ultérieur, après l'injection principale (HE), une quantité de carburant est injectée de manière cadencée en tant que post-injection (NE) cadencée selon des quantités partielles, de façon telle que les quantités partielles de carburant de la post-injection (NE) soient formées pour être de grandeur différente,
**caractérisé en ce que** pendant la post-injection (NE) cadencée, une course de l'aiguille d'injecteur (13a) de l'injecteur (13) et/ou une pression d'injection du carburant sont réglées de façon telle que pour chaque quantité partielle de la post-injection (NE), injectée dans la chambre de combustion (8), une portée du jet de carburant (17) respectivement considéré dans la chambre de combustion (8), soit limitée de manière à ce que la portée soit inférieure à une distance jusqu'à une délimitation de la chambre de combustion.

2. Procédé selon la revendication 1, **caractérisé en ce qu'**une première quantité partielle de carburant de la post-injection (NE) est plus grande qu'une quantité de carburant suivante de la post-injection (NE).

3. Procédé selon l'une des revendications précédentes, **caractérisé en ce que** la post-injection (NE) est injectée dans la chambre de combustion (8) avec une pression d'injection plus petite que celle de l'injection principale (HE).

4. Procédé selon l'une des revendications précédentes, **caractérisé en ce que** l'on débute avec l'injection principale (HE) dans une plage d'angle de vilebrequin de 10° avant le point mort haut jusqu'à 20° d'angle de vilebrequin après le point mort haut.

5. Procédé selon l'une des revendications précédentes, **caractérisé en ce que** l'on débute avec la post-injection (NE) dans une plage de 30° d'angle de vilebrequin à 100° d'angle de vilebrequin après la fin de l'injection principale (HE).

6. Procédé selon l'une des revendications précédentes, **caractérisé en ce que** la post-injection (NE) est effectuée selon un cadencement de deux à huit périodes au cours d'une couse de détente, dans une plage de 20° d'angle de vilebrequin à 150° d'angle de vilebrequin après le point mort haut.

7. Procédé selon l'une des revendications précédentes, **caractérisé en ce qu'**une partie du carburant est injectée en tant que pré-injection (VE) cadencée, avec une pression d'injection inférieure ou égale à celle de l'injection principale (HE).

8. Procédé selon la revendication 7, **caractérisé en ce que** la pré-injection (VE) est injectée dans une plage de 140° d'angle de vilebrequin à 60° d'angle de vilebrequin avant le point mort haut.

9. Procédé selon la revendication 7 ou 8, **caractérisé en ce que** l'injection principale (HE) est effectuée dans une plage de 5° d'angle de vilebrequin à 30° d'angle de vilebrequin après un instant d'allumage de la pré-injection (VE) dans la chambre de combustion (8).

10. Procédé selon l'une des revendications 7 à 9, **caractérisé en ce que** la quantité de carburant de la pré-injection (VE) vaut, dans une plage de charge inférieure et moyenne, environ 20% à 50% de la quantité de carburant de l'injection principale (HE), et dans une plage de charge supérieure ou dans la plage de pleine charge, environ 10% à 30% de la quantité de carburant de l'injection principale (HE).

11. Procédé selon l'une des revendications 7 à 10, **caractérisé en ce que** pendant la post-injection (NE) et/ou la pré-injection (VE), un nuage de carburant d'un jet de carburant (17), engendré pendant une période de cadencement d'injection, est déplacé ou déporté latéralement au moyen d'un mouvement rotationnel formé dans la chambre de combustion (8).

12. Procédé selon l'une des revendications précédentes, **caractérisé en ce que** la course de l'aiguille d'injecteur (13a) de l'injecteur est réglée de façon telle qu'un écoulement instable de cavitation soit engendré dans les alésages d'injection (21) de l'injecteur (13).

13. Procédé selon l'une des revendications précédentes, **caractérisé en ce que** l'on fait varier la course de l'aiguille d'injecteur (13a) de l'injecteur (13) de façon telle qu'à l'intérieur de l'injecteur (13) une section d'écoulement effective entre l'aiguille d'injecteur (13a) et un siège de l'aiguille d'injecteur (22) soit environ égale à 0,8 à 1,2 fois une section d'écoulement effective de la somme de tous les alésages d'injection.

14. Injecteur pour la mise en oeuvre du procédé selon l'une des revendications 1 à 13, qui comprend une aiguille d'injecteur (13a) ouvrant vers l'intérieur et plusieurs alésages d'injection (21), **caractérisé en ce qu'**entre les jets de carburant (17) injectés, il est possible de régler un angle de cône des alésages d'injection de 80° à 140°.

15. Injecteur selon la revendication 14, **caractérisé en ce que** la course de l'aiguille d'injecteur (13a) de l'injecteur (13) peut être réglée de façon telle qu'à l'intérieur de l'injecteur (13) une section d'écoulement effective entre l'aiguille d'injecteur (13a) et le siège d'aiguille (22) soit environ égale à 0,8 à 1,2 fois une section d'écoulement effective de la somme de tous les alésages d'injection (21).

16. Injecteur selon la revendication 15, **caractérisé en ce que** la course de l'aiguille d'injecteur (13a) peut être réglée au moyen d'un système de support à deux ressorts, d'une aiguille d'injecteur commandée par voie piézoélectrique, ou d'un injecteur variable coaxial.
